# EUROPÄISCHE PATENTANMELDUNG

(11) **EP 2 450 295 A1**
(43) Veröffentlichungstag der Anmeldung: **09.05.2012**
(21) Anmeldenummer: 10014288.4
(22) Anmeldetag: 04.11.2010
(51) Int. Cl.: B65G 1/04, B65G 47/51

(54) **Vertikalspeicher für Behälter sowie Anordnung umfassend ein Regal sowie einen Vertikalspeicher**

(71) Anmelder: Beewen GmbH & Co. KG, 57078 Siegen (DE)
(72) Erfinder: Beewen, Udo, 57076 Siegen (DE)
(74) Vertreter: Walther, Walther & Hinz GbR

(57) **Zusammenfassung**

Gegenstand der Erfindung ist ein Vertikalspeicher (10) für Behälter umfassend einen Stützenkörper (11), wobei der Stützenkörper mehrere übereinander angeordnete Aufnahmen (23) aufweist, wobei die Aufnahmen durch einen Antrieb (13-16) in der Höhe durch den Stützenkörper verfahrbar aufnehmbar sind, wobei in der unteren Endstellung der Behälteraufnahmen diese einen Stapel (40) bildend, unmittelbar aufeinander auf dem Boden aufliegen.

## Beschreibung

Die Erfindung betrifft einen Vertikalspeicher für Behälter sowie eine Anordnung umfassend ein Regal mit mehreren Ebenen und Gassen, wobei dem Regal mindestens ein Vertikalspeicher zugeordnet ist. Bei einem Regallager, insbesondere einem Hochregallager umfasst das Regal mehrere Ebenen und mehrere Gassen, wobei auf den einzelnen Ebenen längs zu den Gassen üblicherweise Behälter gelagert sind, beispielsweise in Form von Kisten. Diese Behälter nehmen einzelne Teile auf, wobei die Behälter mit den Teilen zum einen aus dem Regal den einzelnen Arbeitsplätzen zugeführt werden, bzw. zum anderen diese Kisten zurück in das Regal gebracht werden. Die Entnahme bzw. auch die Zufuhr solcher Behälter aus bzw. in das Regal kann auf durchaus unterschiedliche Weise vorgenommen werden. Bekannt sind in diesem Zusammenhang insbesondere sogenannte Regalbediengeräte, wobei die Regalbediengeräte auf dem Boden verlegten Schienen in den Gassen entlang fahren, die entsprechenden Behälter einem bestimmten Platz in der Ebene eines solchen Regals entnehmen, und üblicherweise auf einem Horizontalförderer vor dem Regal absetzen, wobei durch den Horizontalförderer der Transport zum Arbeitsplatz erfolgt. Derartige Regelbediengeräte wiegen zwischen 2500 und 3500 kg. Die Behälter, die durch solche Regalbediengeräte manipuliert werden, weisen ein Gewicht zwischen 30 und 60 kg auf. Das heißt, das Verhältnis zwischen dem Gewicht der zu manipulierenden Behälter und dem des Regalbediengeräts ist aufgrund des Gewichts des Regalbediengerätes äußerst ungünstig, was sich insbesondere auch in einem verhältnismäßig hohen Energieverbrauch bezogen auf die transportierte Masse niederschlägt, selbst wenn weitere Behälter auf einmal transportiert werden. Was allerdings noch viel wesentlicher ist, ist, dass solche Regalbediengeräte verhältnismäßig langsam sind. Das heißt die Kapazität zum Aus- und Einlagern derartiger Behälter ist relativ niedrig.

Insofern ist man auch dazu übergegangen, auf den einzelnen Ebenen eines solchen Regals Schienen vorzusehen, die parallel zu den Gassen verlaufen, und die der Aufnahme eines sogenannten Shuttles dienen. Ein solches Shuttle oder auch Satellitenfahrzeug ist in der Lage den Behälter aus dem Regal zu entnehmen, und zu einer an der Stirnseite des Regals befindlichen Übergabeplattform oder Übergabestation zu transportieren. Im Bereich einer jeden Gasse befindet sich auf jeder Ebene eine solche Übergabestation. Vor der Übergabestation ist ein Lift vorgesehen. Ein solcher Lift umfasst einen Stützenkörper, wobei der Stützenkörper eine vertikal bewegliche Aufnahme mit einem Gurtförderer zur Übernahme eines Behälters zeigt. Mithilfe der Aufnahme des Lifts ist es nun möglich von den einzelnen Übergabestationen die Behälter übernehmen. Die Reihenfolge der Entnahme der einzelnen Behälter von den einzelnen Übergabestationen wird durch den Lift bestimmt. Das heißt, der Lift ist durchaus in der Lage zu sortieren, d.h., die Reihenfolge der entnommenen Behälter zu bestimmen. Durch den Lift werden die entsprechenden Behälter am unteren Ende auf einem Horizontalförderer abgelegt, der die Behälter in der durch den Lift vorbestimmten Reihenfolge beispielsweise einem Montagearbeitsplatz zuführt.

Die Kapazität einer Anlage mit einem solchen Lift ist durchaus begrenzt. Die Kapazität ist hierbei nicht so sehr durch den Shuttleservice im Regal begrenzt, als vielmehr durch den Lift selbst. Denn der Lift muss zur Entnahme eines jeden Behälters immer erst in den Bereich der jeweiligen Übergabestation gefahren werden, fährt dann nach unten und legt den Behälter auf dem Horizontalförderer ab. Darüber hinaus ist ein solcher Lift aufgrund seiner Sortierfähigkeit auch teuer.

Die der Erfindung zugrunde liegende Aufgabe besteht demzufolge darin, die Kapazität bei der Ein- oder Auslagerung von Behältern in ein Regal, insbesondere ein Hochregal zu erhöhen und die Kosten gleichzeitig signifikant zu senken.

Zur Lösung der Aufgabe wird ein Vertikalspeicher für Behälter vorgeschlagen, der stirnseitig vor dem Regal und hier insbesondere einem Hochregal angeordnet ist, wobei der Vertikalspeicher einen Stützenkörper umfasst, wobei der Stützenkörper mehrere übereinander angeordnete Aufnahmen aufweist, wobei die Aufnahmen durch einen Antrieb durch den Stützenkörper in der Höhe verfahrbar aufnehmbar sind, wobei in der unteren Endstellung der Aufnahmen, diese einen Stapel bildend, unmittelbar aufeinander auf einer Unterlage z. B. dem Boden aufliegen. Die Funktionsweise dieses Vertikalspeichers in Bezug auf ein Hochregal lässt sich kurz wie folgt darstellen. Im leeren Zustand der Aufnahmen werden die Aufnahmen durch den Antrieb im Stützenkörper jeweils auf eine Höhe verfahren, die der der Übergabestelle auf der Stirnseite des Regals entspricht. Wie bereits an anderer Stelle ausgeführt, wartet dort das Shuttle mit dem Behälter. Das Shuttle selbst verfügt über eine Fördereinrichtung, beispielsweise in Form von zwei beabstandet zueinander angeordneten, umlaufenden Transportbändern, mit denen das Shuttle in der Lage ist, einerseits den entsprechenden Behälter aus dem Lager zu entnehmen, aber auch andererseits in der Lage ist, den Behälter vom Shuttle auf die Aufnahme des Vertikalspeichers zu übergeben. Das heißt, ein jedes Shuttle übergibt auf der Übergabestelle über die Fördereinrichtung den auf ihm befindlichen Behälter der entsprechenden Aufnahme des Vertikalspeichers. Eine Sortierung findet hierbei nicht statt. Denn die Reihenfolge ist bestimmt durch die Lage der Übergabestellen am Hochregal, auf dem sich das Shuttle mit dem Behälter an der Stirnseite des Lagers befindet. Hieraus folgt als Vorteil, dass die Übergabeplätze entfallen können, auf denen der Behälter nach dem Stand der Technik zwischengelagert wird. Unter Übergabeplatz wird ein solcher verstanden, der eine Lastübergabeeinrichtung zum Übergeben der Last auf den Lift aufweist. Schlussendlich übernimmt der Vertikalspeicher mit seinen Aufnahmen die Funktion der Übergabeplätze. Nach Übernahme der Behälter werden die einzelnen Aufnahmen nach unten verfahren, wobei die sich zu unterst befindende Aufnahme den auf ihr lagernden Behälter zuerst auf dem Horizontalförderer abstellt. In der Reihenfolge der übereinander befindlichen Aufnahmen werden die Behälter auf dem Horizontalförderer abgesetzt. Wesentlich hierbei ist, dass sich die oberste Aufnahme in ihrer unteren Endstellung noch unter der Oberseite des Horizontalförderers befindet, um zu gewährleisten, dass der Horizontalförderer tatsächlich auch noch den Behälter der letzten oberen Aufnahme abnehmen kann. Dadurch, dass die Aufnahmen für die Behälter in dem Speicher vertikal verfahrbar sind, kann der Vertikalspeicher nicht nur speichern, sondern sorgt auch für die Abgabe auf den Horizontalförderer. Von dem Horizontalförderer werden dann die einzelnen Behälter entweder dem Montagearbeitsplatz direkt zugeführt, oder aber sie werden zwischensortiert. Hierzu ist zu bemerken, dass eine Sortierung in der Ebene wesentlich preiswerter ist, als das Sortieren durch den bereits zuvor beschriebenen Lift unmittelbar im Anschluss an die Entnahme der Behälter aus dem Hochregal. Durch den Einsatz des erfindungsgemäßen Vertikalspeichers steigt die Entnahmekapazität erheblich. Da auch die Sortiergeschwindigkeit in der Ebene wesentlich höher ist, als durch den zuvor beschriebenen Lift, ergibt sich somit insgesamt eine signifikante Erhöhung der Kapazität bei gleichzeitig einer Reduzierung der Kosten.

Vorteilhafte Merkmale sind den Unteransprüchen zu entnehmen.

So ist insbesondere in Bezug auf die Ausbildung des Vertikalspeichers vorgesehen, dass der Stützenkörper zwei beabstandet zueinander angeordnete Stützen umfasst, wobei eine jede Stütze ein umlaufendes, angetriebenes Antriebsglied, z. B. eine Kette oder Riemen aufweist, wobei die beiden Antriebsglieder in bestimmten Abständen sie verbindende Mitnehmer aufweisen, die in Eingriff mit den Aufnahmen, insbesondere für die Behälter bringbar sind. Das Antriebsglied, das als Kette oder Riemen ausgebildet ist, ist durch Rollen seitlich in einer Führungsschiene der jeweiligen Stütze geführt.

Nach einem weiteren Merkmal ist vorgesehen, dass die Aufnahme mindestens eine Traverse umfasst, wobei die Traverse zwei beabstandet zueinander angeordnete Gabelarme zur Aufnahme eines Behälters aufweist. Bei Belastung der Gabelarme durch den Behälter ist sicherzustellen, dass diese in dem Stützenkörper und hier insbesondere in den Stützen sicher geführt sind. Insofern ist der Arm in der jeweiligen Stütze vertikal beweglich geführt.

In diesem Zusammenhang ist insbesondere hervorzuheben, dass jeder Gabelarm über einen Ober- und einen Unterarm verfügt, wobei der Oberarm zu dem im Einbauzustand im Wesentlichen horizontal ausgerichteten Unterarm winklig verläuft. Zur Führung dieses winkligen Oberarms weist der Oberarm zwei seitlich versetzt zueinander angeordnete Rollen auf, wobei zumindest eine Rolle in einer Stützschiene in der Stütze vertikal beweglich geführt ist, und die andere Rolle sich an der Stütze, insbesondere der Vorderseite der Stütze abstützt. Das heißt, der Oberarm überträgt das durch den Behälter auf den Gabelarm ausgeübte Moment durch die Rollen auf den Stützenkörper.

Nach einem weiteren Merkmal der Erfindung ist die Traverse einer jeden Aufnahme in lösbaren Eingriff mit dem an der Kette oder Riemen angeordneten Mitnehmer bringbar. Es wurde bereits an anderer Stelle erwähnt, dass die einzelnen Aufnahmen im nicht benutzten Zustand sich als Stapel in ihrer untersten Stellung befinden. Dies bedingt, dass sich die Aufnahmen, wie dies bereits zuvor erwähnt worden ist, über die Traversen in lösbaren Eingriff mit dem jeweiligen Mitnehmer befinden müssen. In diesem Zusammenhang ist insbesondere vorgesehen, dass der Mitnehmer mindestens einen Mitnehmernocken aufweist, durch den der Mitnehmer in Eingriff mit einem an der Traverse angeordneten korrespondierend ausgebildeten Nocken bringbar ist. Die Traverse verläuft unmittelbar benachbart zu dem Mitnehmer; der an dem Mitnehmer angeordnete Mitnehmernocken greift in den korrespondierenden Nocken der Traverse bei der Aufwärtsbewegung ein und nimmt diesen mit. Um zu verhindern, dass der Mitnehmernocken des ersten Mitnehmers sämtliche Aufnahmen auf einmal mitnimmt, ist vorgesehen, dass die Mitnehmernocken und die Nocken an der Traverse an unterschiedlichen Stellen angeordnet sind. Das heißt, dass ein jeder Mitnehmer einer Traverse einer bestimmten Aufnahme zugeordnet ist.

Gegenstand der Erfindung ist ebenfalls eine Anordnung umfassend ein Regal mit mehreren Ebenen und Gassen, wobei dem Regal mindestens ein Vertikalspeicher der zuvor beschriebenen Art zugeordnet ist, wobei dem Vertikalspeicher nach- oder vorgeordnet ein Horizontalförderer ist. Hieraus wird deutlich, dass die Anordnung dieses Vertikalspeichers unmittelbar an der Entnahme- bzw. Aufgabeseite zu dem Regal vorgesehen ist, wobei die von dem Vertikalspeicher abgegebenen Behälter auf einem Horizontalförderer abgelegt werden, der diese Behälter dem Arbeitsplatz zuführt. Wenn die Abnahme der Behälter aus dem Vertikalspeicher mit einer bestimmten zeitlichen Verzögerung erfolgen soll, so fungiert ein solcher Vertikalspeicher auch als Zwischenspeicher. Ein solcher Zwischenspeicher ist aber durchaus in der Lage, relativ schnell die durch ihn aufgenommenen Behälter abzugeben, zumindest schneller, als dies der Fall ist, wenn die Behälter erst aus dem Hochregal zur Übergabestation gebracht werden und von dort durch den Lift auf dem Horizontalförderer abgesetzt werden.

Nach einem besonderen Merkmal der Erfindung ist vorgesehen, dass bei der Anordnung, dem Vertikalspeicher als Zwischenspeicher eine Sortieranlage nach- oder vorgeordnet ist. Wie bereits an anderer Stelle erwähnt, gibt es für die Sortierung mehrere Möglichkeiten, wobei eine Sortierung in der Ebene im Bereich des Horizontalförderers die preiswerteste und die schnellste Methode darstellt.

Anhand der Zeichnungen wird die Erfindung nachstehend beispielhaft näher erläutert.
- Fig. 1: zeigt schematisch die Anordnung des erfindungsgemäßen Vertikalspeichers auf der Stirnseite eines Hochregals;
- Fig. 2: zeigt den Vertikalspeicher in der perspektivischen Darstellung, wobei sich die einzelnen Aufnahmen in einem Stapel unterhalb des Horizontalförderers befinden;
- Fig. 3: zeigt eine Darstellung gemäß Fig. 2 im ausgefahrenen Zustand der Aufnahmen;
- Fig. 4: zeigt eine Ansicht von vorne auf den Vertikalspeicher;
- Fig. 5: zeigt eine Seitenansicht gemäß Fig. 2;
- Fig. 6: zeigt einen Schnitt gemäß der Linie VI - VI aus Fig. 4 in vergrößerter Darstellung;
- Fig. 6a: zeigt die Darstellung aus Fig. 6 in weiter vergrößerter Darstellung;
- Fig. 7: zeigt die Ausbildung von Öffnungen der Aufnahme der Nocken am Mitnehmer;
- Fig. 8: zeigt die Führung der Kette in der Führungsschiene;

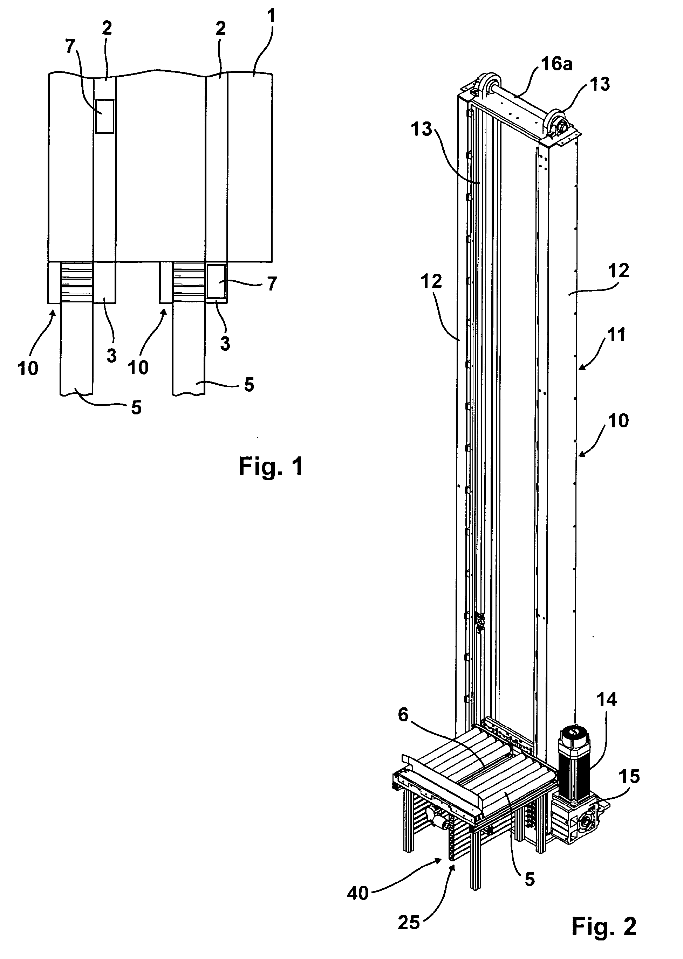

Gemäß der schematischen Darstellung in der Fig. 1 ist das Hochregal mit 1 bezeichnet. Das Hochregal besitzt einzelne Gassen 2, wobei sich am Ende einer jeden Gasse stirnseitig am Hochregal eine Übergabestelle befindet, von der durch das Shuttle 7 die Behälter an den Vertikalspeicher abgegeben werden. Das heißt, den Übergabestellen zugeordnet ist der Vertikalspeicher 10. Dem Vertikalspeicher 10 nachgeordnet ist ein Horizontalförderer 5.

Gegenstand der Erfindung ist nicht nur die Anordnung des Vertikalspeichers an der Stirnseite im Bereich der Übergabestellen 3 des Regals 1, sondern auch die Ausbildung des Vertikalspeichers 10 an sich. In diesem Zusammenhang wird nunmehr z. B. auf die Figur 2 nachfolgend Bezug genommen. Der Vertikalspeicher 10 umfasst den Stützenkörper 11 mit den beiden Stützen 12. Die beiden Stützen sind im Querschnitt im Wesentlichen U-förmig ausgebildet, wobei in einer jeden Stütze eine Kette 13 als Antriebsglied umlaufend angeordnet ist. Zum Antrieb der Kette ist ein Motor 14 vorgesehen, der über ein Getriebe 15 eine Welle 16 antreibt, die zu beiden Seiten im Bereich der Stützen 12 jeweils ein Ritzel zeigt (nicht dargestellt), um das die Kette geführt ist. Am oberen Ende sind die beiden Stützen durch eine Achse 16a verbunden, die ebenfalls jeweils endseitig ein Ritzel zeigt, über die die beiden Ketten 13 geführt sind.

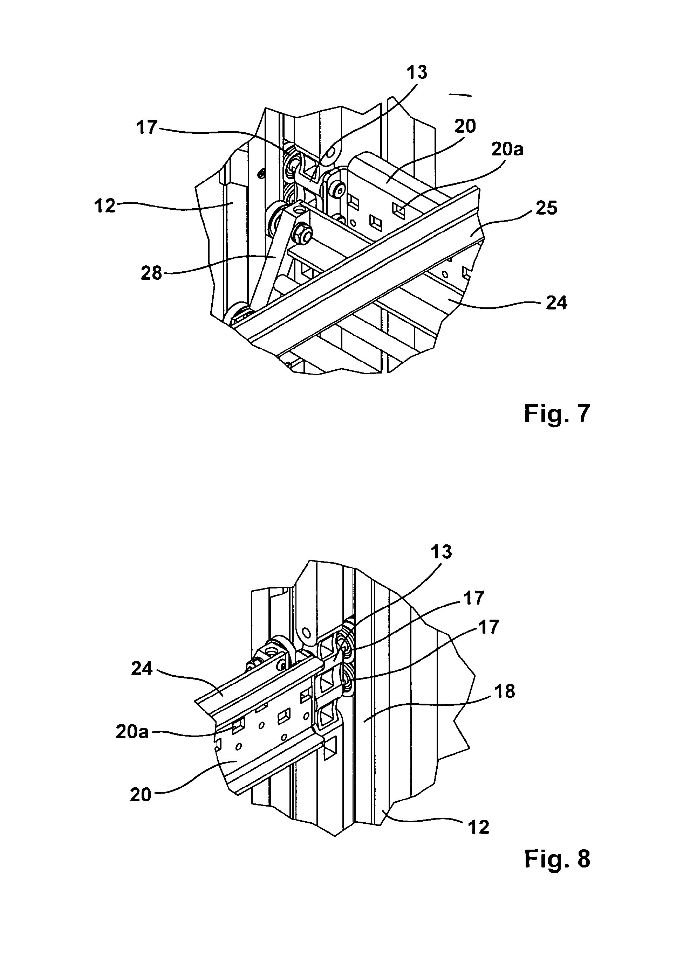

Betrachtet man nur zunächst einmal die Figuren 7 und 8, so erkennt man die Kette 13 mit den daran angeordneten Rollen 17 die in einer vertikal verlaufenden Führungsschiene 18 geführt sind. Die Führungsschiene 18 ist Bestandteil der Stütze 12. An den Ketten befindet sich darüber hinaus der horizontal verlaufende Mitnehmer 20, wobei die Anzahl der Mitnehmer 20 der Anzahl der Traversen 24 entspricht, an denen jeweils zwei Gabelarme 25 beabstandet zueinander angeordnet sind, wobei die beiden Gabelarme in Verbindung mit der Traverse die Aufnahme 23 bilden.

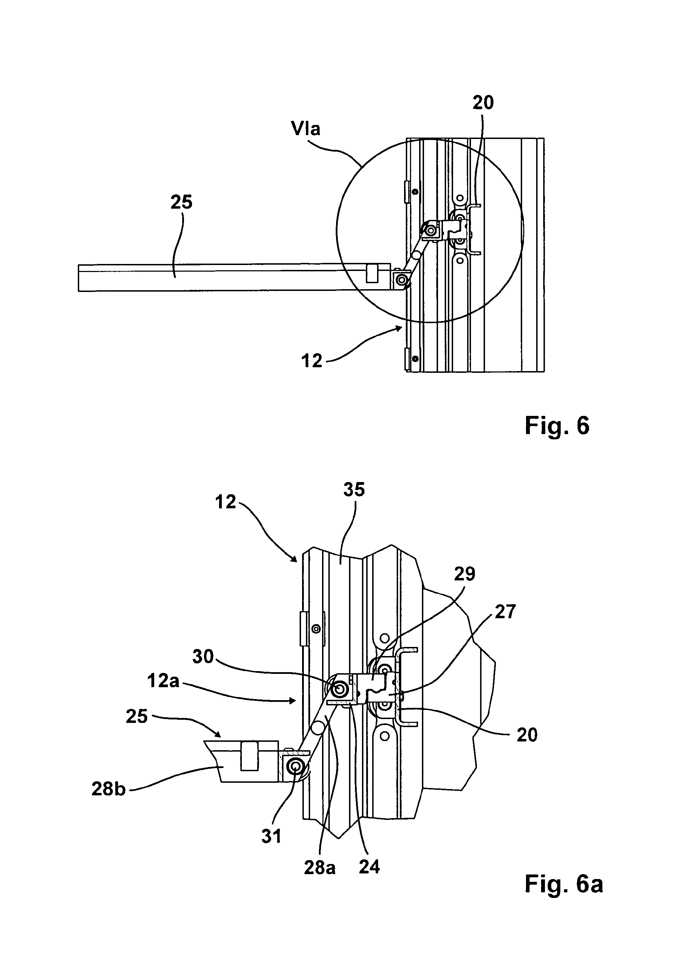

Die Führung der Gabelarme 25 in den Stützen ergibt sich in Anschauung z. B. der Figuren 6, 6a und 7. Der insgesamt mit 25 bezeichnete Gabelarm umfasst einen Oberarm 28a und einen Unterarm 28b. Die beiden Unterarme 28b dienen als Auflager für den Behälter (nicht dargestellt). Der Oberarm 28a weist zwei Rollen 30, 31 auf, wobei die Rolle 30 am oberen Ende des Oberarms 28a angeordnet ist, nämlich im Bereich der Traverse 24. Die Rolle 30 ist in einer im Querschnitt U-förmigen Stützschiene 35 geführt, wohingegen die Rolle 31, die seitlich und in der Höhe versetzt an dem Oberarm angeordnet ist, an der Vorderseite 12a der Stütze 12 entlang läuft.

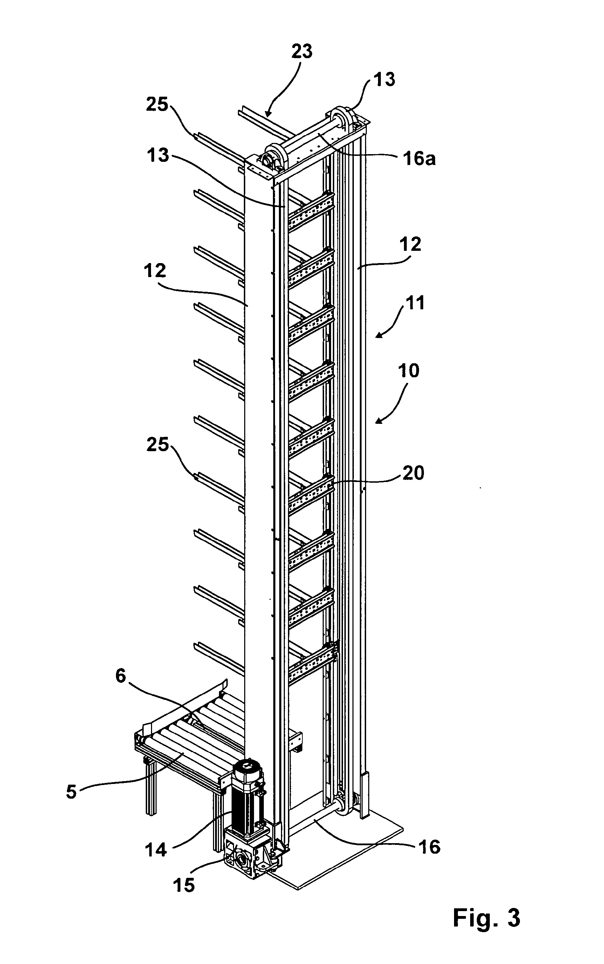

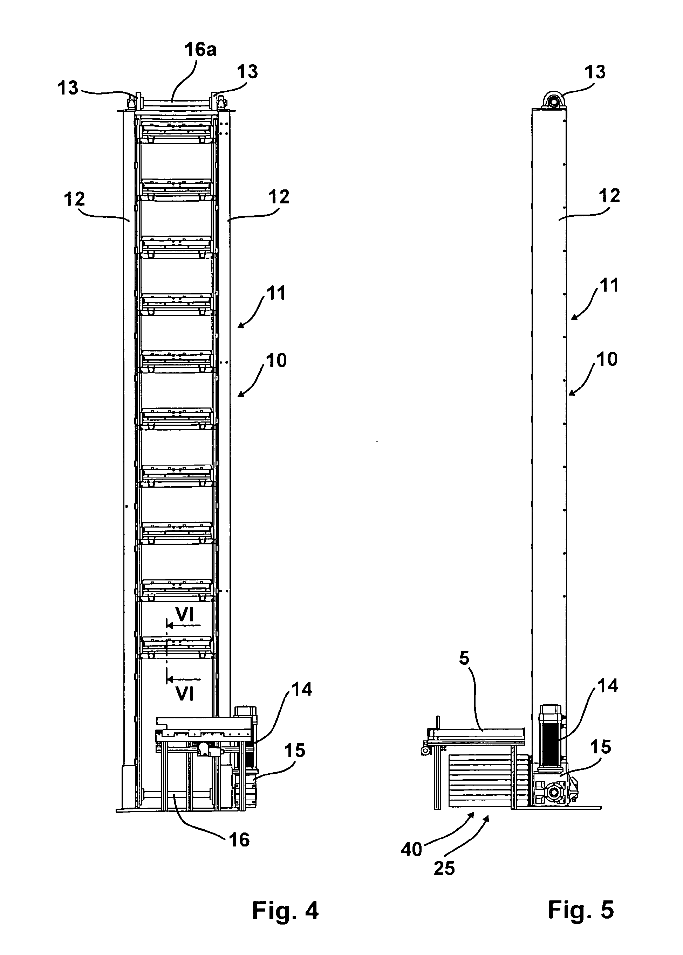

Aus den Figuren 6, 6a wird auch das Prinzip der Mitnahme der einzelnen Traversen der Aufnahmen durch den jeweiligen Mitnehmer 20 deutlich. Der Mitnehmer 20 weist, wie sich dies in Anschauung von Figur 7 und 8 ergibt, verschiedene Öffnungen 20a auf, in die die Mitnehmernocken 27 eingehängt sind. Korrespondierend hierzu zeigt die Traverse 24 jeweils entsprechende Nocken 29. Die Mitnehmernocken 27 und die Nocken 29 greifen ineinander (Fig. 6, Fig. 6a). Durch die seitlich versetzte Anordnung der Mitnehmernocken 27 und entsprechend der Nocken 29 an dem Mitnehmer 20 und an der Traverse 24 kann die Mitnahme der einzelnen Traversen bzw. Aufnahmen derart erfolgen, dass diese nacheinander von dem Stapel 40 gemäß Fig. 5 bzw. auch gemäß Fig. 2 aufgenommen werden, und in eine Position gemäß Fig. 3 gleichmäßig verteilt an dem Stützenkörper überführt werden, wobei jede Aufnahme einer Übergabestation zugeordnet ist.

In Bezug auf Fig. 1 wurde bereits dargelegt, dass sich der Vertikalspeicher im Bereich eines Horizontalförderers 5 befindet. Betrachtet man in diesem Zusammenhang beispielsweise die Fig. 2, so ergibt sich, dass der Horizontalförderer im Bereich des Vertikalspeichers 10 als Rollenbahn ausgebildet ist. Aus Fig. 2 ist ein Stapel 40 an Aufnahmen mit den einzelnen Gabelarmen 25 erkennbar. Im Bereich dieser Gabelarme 25 besitzt der Horizontalförderer 5 in Form der Rollenbahn einen Schlitz 6 zum Durchtritt der einzelnen Gabelarme bei der Aufwärtsbewegung. Eine oder mehrere der Rollen des Horizontalförderers können hierbei angetrieben sein, um die abgesetzten Behälter abzutransportieren.

### Bezugszeichenliste:

- 1: Hochregal
- 2: Gassen
- 3: Übergabestelle
- 5: Horizontalförderer
- 6: Schlitz
- 10: Vertikalspeicher
- 11: Stützenkörper
- 12: Stütze
- 12a: Vorderseite
- 13: Kette (Antriebsglied)
- 14: Motor
- 15: Getriebe
- 16: Welle
- 16a: Achse
- 17: Rollen der Kette
- 18: Führungsschiene
- 20: Mitnehmer
- 20a: Öffnungen im Mitnehmer
- 23: Aufnahme
- 24: Traverse
- 25: Gabelarme
- 27: Mitnehmernocken
- 28a: Oberarm des Gabelarms
- 28b: Unterarm des Gabelarms
- 29: Nocken
- 30: Rolle
- 31: Rolle
- 35: Stützschiene
- 40: Stapel

## Patentansprüche

1. Vertikalspeicher (10) für Behälter umfassend einen Stützenkörper (11), wobei der Stützenkörper (11) mehrere übereinander angeordnete Aufnahmen 23 aufweist, wobei die Aufnahmen (23) durch einen Antrieb (13, 14, 15, 16) in der Höhe durch den Stützenkörper (11) verfahrbar aufnehmbar sind, wobei in der unteren Endstellung der Aufnahmen (23) diese einen Stapel (40) bildend, unmittelbar aufeinander auf einer Unterlage z.B dem Boden aufliegen.

2. Vertikalspeicher nach Anspruch 1,
**dadurch gekennzeichnet,**
**dass** der Stützenkörper (11) zwei beabstandet zueinander angeordnete Stützen (12) umfasst, wobei eine jede Stütze (12) ein umlaufendes angetriebenes Antriebsglied (13) aufweist, wobei die beiden Antriebsglieder (13) in bestimmbaren Abständen sie verbindende Mitnehmer (20) aufweisen, die in Eingriff mit den Aufnahmen (23) bringbar sind.

3. Vertikalspeicher nach einem der voranstehenden Ansprüche,
**dadurch gekennzeichnet,**
**dass** das Antriebsglied (13) als Kette oder Riemen ausgebildet ist.

4. Vertikalspeicher nach einem der voranstehenden Ansprüche,
**dadurch gekennzeichnet,**
**dass** das Antriebsglied (13) durch Rollen (17) seitlich in einer Führungsschiene (18) der Stütze (12) geführt ist.

5. Vertikalspeicher nach einem der voranstehenden Ansprüche,
**dadurch gekennzeichnet,**
**dass** die Aufnahme (23) mindestens eine Traverse (24) umfasst, wobei die Traverse (24) zwei beabstandet zueinander angeordnete Gabelarme (25) zur Aufnahme eines Behälters aufweist.

6. Vertikalspeicher nach einem der voranstehenden Ansprüche,
**dadurch gekennzeichnet,**
**dass** jeder Gabelarm (25) in einer Stütze (12) vertikal beweglich geführt ist.

7. Vertikalspeicher nach einem der voranstehenden Ansprüche,
**dadurch gekennzeichnet,**
**dass** jeder Gabelarm (25) über einen Ober- und einen Unterarm (28a), (28b) verfügt, wobei der Oberarm (28a) zu dem im Einbauzustand im Wesentlichen horizontal ausgerichteten Unterarm (28b) winklig verläuft.

8. Vertikalspeicher nach einem der voranstehenden Ansprüche,
**dadurch gekennzeichnet,**
**dass** der Oberarm (28) zwei seitlich versetzt zueinander angeordnete Rollen (30, 31) aufweist, wobei die Rolle (30) in einer Stützschiene (35) in der Stütze (12) vertikal beweglich geführt ist.

9. Vertikalspeicher nach einem der voranstehenden Ansprüche,
**dadurch gekennzeichnet,**
**dass** die Traverse (24) einer jeden Aufnahme (23) in lösbaren Eingriff mit dem Mitnehmer (20) bringbar ist.

10. Vertikalspeicher nach einem der voranstehenden Ansprüche,
**dadurch gekennzeichnet,**
**dass** der Mitnehmer (20) mindestens einen Mitnehmernocken (27) aufweist, durch den der Mitnehmer (20) in Eingriff mit einem korrespondierend hierzu ausgebildeten Nocken an der Traverse (24) bringbar ist.

11. Vertikalspeicher nach einem der voranstehenden Ansprüche,
**dadurch gekennzeichnet,**
**dass** der mindestens eine Mitnehmernocken (27) und der Nocken (29) an unterschiedlichen Stellen an dem jeweiligen Mitnehmer (20) und der Traverse (24) angeordnet sind, aber jeweils der Nocken eines Mitnehmers und einer Traverse in Eingriff bringbar sind.

12. Anordnung umfassend ein Regal mit mehreren Ebenen und Gassen (2), wobei dem Regal (1) mindestens ein Vertikalspeicher (10) gemäß einem der voranstehenden Ansprüche zugeordnet ist, wobei dem Vertikalspeicher nach- oder vorgeordnet ein Horizontalförderer (5) ist.

13. Anordnung nach Anspruch 12,
**dadurch gekennzeichnet,**
**dass** der Vertikalspeicher (10) als Zwischenspeicher dient.

14. Anordnung nach Anspruch 12 oder 13,
**dadurch gekennzeichnet,**
**dass** dem Vertikalspeicher (10) als Zwischenspeicher eine Sortieranlage nach- oder vorgeordnet ist.

## Geänderte Patentansprüche

### Geänderte Patentansprüche gemäss Regel 137(2) EPÜ.

**1.** Vertikalspeicher (10) für Behälter umfassend einen Stützenkörper (11), wobei der Stützenkörper (11) mehrere übereinander angeordnete Aufnahmen (23) aufweist, wobei die Aufnahmen (23) durch einen Antrieb (13, 14, 15, 16) in der Höhe durch den Stützenkörper (11) verfahrbar aufnehmbar sind, wobei in der unteren Endstellung der Aufnahmen (23) diese einen Stapel (40) bildend, unmittelbar aufeinander auf einer Unterlage z. B dem Boden aufliegen, wobei der Stützenkörper (11) zwei beabstandet zueinander angeordnete Stützen (12) umfasst, wobei eine jede Stütze (12) ein umlaufendes angetriebenes Antriebsglied (13) aufweist,
**dadurch gekennzeichnet,**
**dass** die beiden Antriebsglieder (13) in bestimmbaren Abständen sie verbindende Mitnehmer (20) aufweisen, die in Eingriff mit den Aufnahmen (23) bringbar sind, wobei der Mitnehmer (20) mindestens einen Mitnehmernocken (27) aufweist, durch den der Mitnehmer (20) in Eingriff mit einem korrespondierend hierzu ausgebildeten Nocken (29) an der Traverse (24) bringbar ist, und wobei der mindestens eine Mitnehmernocken (27) und der Nocken (29) an unterschiedlichen Stellen an dem jeweiligen Mitnehmer (20) und einer Traverse (24) angeordnet sind, wobei jeweils der Mitnehmernocken (27) eines Mitnehmers und der Nocken (29) einer Traverse in Eingriff bringbar sind.

**2.** Vertikalspeicher nach Anspruch 1 ,
**dadurch gekennzeichnet,**
**dass** das Antriebsglied (13) als Kette oder Riemen ausgebildet ist.

**3.** Vertikalspeicher nach einem der voranstehenden Ansprüche,
**dadurch gekennzeichnet,**
**dass** das Antriebsglied (13) durch Rollen (17) seitlich in einer Führungsschiene (18) der Stütze (12) geführt ist.

**4.** Vertikalspeicher nach einem der voranstehenden Ansprüche,
**dadurch gekennzeichnet,**
**dass** die Aufnahme (23) mindestens eine Traverse (24) umfasst, wobei die Traverse (24) zwei beabstandet zueinander angeordnete Gabelarme (25) zur Aufnahme eines Behälters aufweist.

**5.** Vertikalspeicher nach Anspruch 4 ,
**dadurch gekennzeichnet,**
**dass** jeder Gabelarm (25) in einer Stütze (12) vertikal beweglich geführt ist.

**6.** Vertikalspeicher nach einem der voranstehenden Ansprüche 4 oder 5,
**dadurch gekennzeichnet,**
**dass** jeder Gabelarm (25) über einen Ober- und einen Unterarm (28a), (28b) verfügt, wobei der Oberarm (28a) zu dem im Einbauzustand im Wesentlichen horizontal ausgerichteten Unterarm (28b) winklig verläuft.

**7.** Vertikalspeicher nach Anspruch 6 ,
**dadurch gekennzeichnet,**
**dass** der Oberarm (28) zwei seitlich versetzt zueinander angeordnete Rollen (30, 31) aufweist, wobei die Rolle (30) in einer Stützschiene (35) in der Stütze (12) vertikal beweglich geführt ist.

**8.** Anordnung umfassend ein Hochregal (1) mit mehreren Ebenen und Gassen (2), wobei dem Hochregal (1) mindestens ein Vertikalspeicher (10) für Behälter nach einem der voranstehenden Ansprüche zugeordnet ist, wobei die Zuordnung des mindestens einen Vertikalspeichers (10) zum Hochregal (1) derart ist, dass ein durch ein Shuttle des Hochregals aus dem Hochregal (1) entnommener Behälter durch eine entsprechende Aufnahme des Vertikalspeichers (10) aufnehmbar ist, wobei dem Vertikalspeicher (10) ein Horizontalförderer (5) nach- oder vorgeordnet ist, wobei durch den Vertikalspeicher (10) durch die entsprechende Aufnahme, der Behälter auf dem Horizontalförderer (5) absetzbar ist.

**9.** Anordnung nach Anspruch 8,
**dadurch gekennzeichnet,**
**dass** der Vertikalspeicher (10) als Zwischenspeicher dient.

**10.** Anordnung nach Anspruch 8 oder 9 ,
**dadurch gekennzeichnet,**
**dass** dem Vertikalspeicher (10) als Zwischenspeicher eine Sortieranlage nach- oder vorgeordnet ist.
